# EUROPEAN PATENT APPLICATION

(11) **EP 3 889 507 A1**
(43) Date of publication of application: **06.10.2021**
(21) Application number: 21161899.6
(22) Date of filing: 10.03.2021
(51) Int. Cl.: F23R 3/26, F02C 7/228, F02C 9/22, F02C 9/28, F23R 3/28, F23R 3/34

(54) **METHOD OF OPERATING A COMBUSTOR HEAD END ASSEMBLY**

(30) Priority: 30.03.2020 US 202016833938
(71) Applicant: General Electric Company, Schenectady, NY 12345 (US)
(72) Inventor: NATARAJAN, Jayaprakash, Greenville, SC South Carolina 29615 (US); ZIMINSKY, Willy Steve, Greenville, SC South Carolina 29615 (US); PINSON, Mark William, Greenville, SC South Carolina 29615 (US)
(74) Representative: Dittmann, Rolf

(57) **Abstract**

A method for selectively operating a combustor head end assembly (100) is provided. The combustor head end assembly (100) includes a plurality of bundled tube fuel nozzles (200). The method includes opening a first fuel circuit (PM1) of a plurality of fuel circuits (PM1), (PM2), (PM3). The first fuel circuit (PM1) of the plurality of fuel circuits (PM1), (PM2), (PM3) being fluidly coupled to a first nozzle group (300). The first nozzle group (300) includes one bundled tube fuel nozzle (200) of the plurality of bundled tube fuel nozzles (200). The method further includes adjusting an airflow (26) received by the plurality of bundled tube fuel nozzles (200) in response to opening the first fuel circuit (PM1) of the plurality of fuel circuits (PM1), (PM2), (PM3). The airflow (26) is adjusted based on an emissions output requirement corresponding with the first nozzle group (300). The method also includes firing the first nozzle group (300).

## Description

### FIELD

The present disclosure relates generally to a method of operating a fuel nozzle assembly within a combustor of a turbomachine.

### BACKGROUND

Turbomachines are utilized in a variety of industries and applications for energy transfer purposes. For example, a gas turbine engine generally includes a compressor section, a combustion section, a turbine section, and an exhaust section. The compressor section progressively increases the pressure of a working fluid entering the gas turbine engine and supplies this compressed working fluid to the combustion section. The compressed working fluid and a fuel (e.g., natural gas) mix within the combustion section and burn in a combustion chamber to generate high pressure and high temperature combustion gases. The combustion gases flow from the combustion section into the turbine section where they expand to produce work. For example, expansion of the combustion gases in the turbine section may rotate a rotor shaft connected, e.g., to a generator to produce electricity. The combustion gases then exit the gas turbine via the exhaust section.

Particular combustion systems for gas turbine engines utilize combustors having multiple fuel nozzles for premixing a gaseous fuel with compressed air upstream from a combustion zone, as a means to keep nitrogen oxide (NOx) emissions low.

As renewable sources of power generation become increasingly popular and reliable, there is an increasing desire to have a greater gas turbine operational flexibility in order to integrate the gas turbine alongside a renewable system. One method for increasing the operational flexibility of a gas turbine is by sub-partitioning the fuel nozzles. However, issues exist with the current methods of operating fuel nozzles in this way. For example, many known fuel nozzles impart a swirl on the fuel/air mixture entering the combustion zone. The swirl of the fuel/air mixture in the combustion chamber leads to nozzle-to-nozzle interactions that negatively impact the NOx emissions. Additionally, known methods for sub-partitioning fuel nozzles do not meet emissions requirements while maintaining full operational flexibility.

Thus, an improved method for operating gas turbine fuel nozzles is desired in the art. In particular, methods that provide for full gas turbine operational flexibility while meeting emissions standards/requirements are desirable.

### BRIEF DESCRIPTION

Aspects and advantages of the methods in accordance with the present disclosure will be set forth in part in the following description, or may be obvious from the description, or may be learned through practice of the technology.

One embodiment of the present disclosure is a method for selectively operating a head end assembly of a combustor of a gas turbine. The head end assembly includes a plurality of bundled tube fuel nozzles. The method includes opening a first fuel circuit of a plurality of fuel circuits. The first fuel circuit of the plurality of fuel circuits is fluidly coupled to a first nozzle group of a plurality of nozzle groups, and the first nozzle group includes one bundled tube fuel nozzle of the plurality of bundled tube fuel nozzles. The method further includes adjusting an airflow received by the plurality of bundled tube fuel nozzles in response to opening the first fuel circuit of the plurality of fuel circuits. The airflow is adjusted based on an emissions output requirement corresponding with the first nozzle group. The method also includes firing the first nozzle group.

Another embodiment of the present disclosure is a method of selectively operating a head end assembly of a combustor of a gas turbine. The fuel nozzle assembly includes a plurality of bundled tube fuel nozzles. The method includes opening a first fuel circuit of a plurality of fuel circuits. The first fuel circuit of the plurality of fuel circuits is fluidly coupled to a first nozzle group of a plurality of nozzle groups. The first nozzle group includes one bundled tube fuel nozzle of the plurality of bundled tube fuel nozzles. The method further includes adjusting an airflow received by the plurality of bundled tube fuel nozzles from a compressor by adjusting the position of inlet guide vanes in response to opening the first fuel circuit of the plurality of fuel circuits. The airflow is adjusted based on an emissions output requirement corresponding with the first nozzle group. The method also includes firing the first nozzle group within the combustor.

These and other features, aspects and advantages of the present methods of operating a combustor having bundled tube fuel nozzles on different fuel circuits will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present methods, including the best mode of making and using the present systems and methods, directed to one of ordinary skill in the art, is set forth in the specification, which makes reference to the appended figures.
FIG. 1 illustrates a functional block diagram of an exemplary gas turbine, in accordance with embodiments of the present disclosure.
FIG. 2 illustrates a simplified cross-sectional side view of an exemplary combustor, in accordance with embodiments of the present disclosure.
FIG. 3 illustrates a cross-sectional side view of a portion of a single bundled tube fuel nozzle, in accordance with embodiments of the present disclosure.
FIG. 4 illustrates a plan view of a bundled tube fuel nozzle assembly, as viewed from an aft end of a combustor looking in an upstream direction, in accordance with embodiments of the present disclosure.
FIG. 5 illustrates a plan view of a bundled tube fuel nozzle assembly, as viewed from an aft end of a combustor looking in an upstream direction, in accordance with embodiments of the present disclosure.
FIG. 6 illustrates a plan view of a bundled tube fuel nozzle assembly, as viewed from an aft end of a combustor looking in an upstream direction, in accordance with embodiments of the present disclosure.
FIG. 7 illustrates a plan view of a bundled tube fuel nozzle assembly, as viewed from an aft end of a combustor looking in an upstream direction, in accordance with embodiments of the present disclosure.
FIG. 8 illustrates a plan view of a bundled tube fuel nozzle assembly, as viewed from an aft end of a combustor looking in an upstream direction, in accordance with embodiments of the present disclosure.
FIG. 9 illustrates a method of selectively operating a fuel nozzle assembly, in accordance with embodiments of the present disclosure.
FIG. 10 illustrates a method of operating a fuel nozzle assembly within a combustor of a turbomachine, in accordance with embodiments of the present disclosure.

### DETAILED DESCRIPTION

Reference now will be made in detail to embodiments of the present methods of operating a combustor having bundled tube fuel nozzles on different fuel circuits, one or more examples of which are illustrated in the drawings. Each example is provided by way of explanation, rather than limitation of, the technology. In fact, it will be apparent to those skilled in the art that various modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

As used herein, the terms "upstream" and "downstream" refer to the relative direction with respect to fluid flow in a fluid pathway. For example, "upstream" refers to the direction from which the fluid flows, and "downstream" refers to the direction to which the fluid flows.

It is sometimes necessary to describe parts that are disposed at different radial distances with respect to a center axis. The term "radially" refers to the relative direction that is substantially perpendicular to an axial centerline of a particular component; the term "axially" refers to the relative direction that is substantially parallel to, and/or coaxially aligned with, an axial centerline of a particular component; and the term "circumferentially" refers to the relative direction that extends around the axial centerline of a particular component.

As used herein, terms of approximation, such as "generally," "about," or "substantially" include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although exemplary embodiments of the present disclosure will be described generally in the context of fuel nozzle assembly for a land-based power-generating gas turbine for purposes of illustration, one of ordinary skill in the art will readily appreciate that embodiments of the present disclosure may be applied to any style or type of fuel nozzle for a turbomachine and are not limited to combustors or combustion systems for land-based power-generating gas turbines unless specifically recited in the claims.

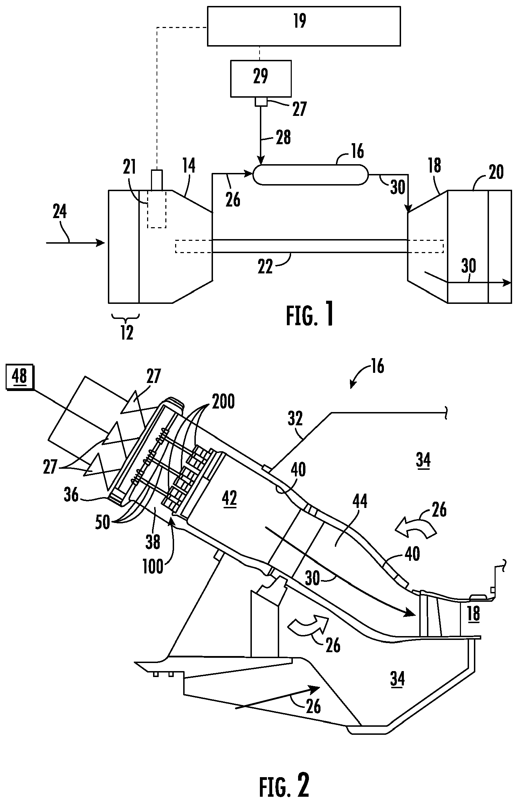

Referring now to the drawings, FIG. 1 illustrates a schematic diagram of an exemplary gas turbine 10. The gas turbine 10 generally includes an inlet section 12, a compressor 14 disposed downstream of the inlet section 12, at least one combustor 16 disposed downstream of the compressor 14, a turbine 18 disposed downstream of the combustor 16, an exhaust section 20 disposed downstream of the turbine 18, and a turbine control system 19 (hereinafter referred to as the "controller"). Additionally, the gas turbine 10 may include one or more shafts 22 that couple the compressor 14 to the turbine 18.

During operation, air 24 flows through the inlet section 12 and into the compressor 14 where the air 24 is progressively compressed, thus providing compressed air 26 to the combustor 16. At least a portion of the compressed air 26 is mixed with a fuel 28 within the combustor 16 and burned to produce combustion gases 30. The combustion gases 30 flow from the combustor 16 into the turbine 18, wherein energy (kinetic and/or thermal) is transferred from the combustion gases 30 to rotor blades (not shown), thus causing the shaft 22 to rotate. The mechanical rotational energy may then be used for various purposes, such as to power the compressor 14 and/or to generate electricity. The combustion gases 30 exiting the turbine 18 may then be exhausted from the gas turbine 10 via the exhaust section 20.

The compressor 14 may include a plurality of circumferentially arranged cantilevered inlet guide vanes ("IGVs") 21. The IGVs 21 are coupled to an actuator 23 and may be actuated by the controller 19 to regulate airflow flowing through the compressor 14. For example, during base-load-operation, the IGVs may be actuated to a fully open position, such as at an angle of approximately 90 degrees, to allow maximum airflow through the compressor 14. However, during part-load operation, the IGV angle may be set to a more closed position to reduce airflow through the compressor 14.

The gas turbine 10 may also include a plurality of fuel manifolds or circuits configured to deliver fuel to the various fuel nozzles within the combustor 16. For example, in one embodiment, a gas turbine 10 may include three fuel circuits (e.g., PM1, PM2 and PM3 fuel circuits, so named because the fuel supplied by the circuits is pre-mixed with air within the fuel nozzles before entering the combustion zone). It should be appreciated, however, that a gas turbine 10 may include any number and type of fuel circuits depending on the configuration of the gas turbine 10 and, thus, need not have the same number and type of fuel circuits described above. Additionally, depending on the particular mode at which a gas turbine 10 is operating, it should be appreciated that fuel may not be supplied through each of the fuel circuits. Further, each fuel circuit may be fluidly coupled to one or more valves 27. The one or more valves 27 may be configured to regulate the fuel flowing from each of the respective fuel circuits into the fuel nozzle assembly 100.

A fuel controller 29 may regulate the fuel 28 flowing from a fuel supply (48, shown in FIG. 2) to the combustor 16. The fuel controller 29 may also select the type of fuel for the combustor. Additionally, the fuel controller 29 may also generate and implement fuel split commands that determine the portions of fuel 28 flowing to the various fuel circuits of the combustor 16. Generally, the fuel split commands correspond to a fuel split percentage for each fuel circuit, which defines what percentage of the total amount of fuel 28 delivered to the combustor 16 is supplied through a particular fuel circuit (e.g., the percentage of the total fuel flow being supplied to each of the PM1, PM2 and PM3 fuel circuits). It should be appreciated that the fuel controller 29 may comprise a separate unit or may be a component of the turbine controller 19.

As shown in FIG. 2, the combustor 16 may be at least partially surrounded an outer casing 32, such as a compressor discharge casing. The outer casing 32 may at least partially define a high pressure plenum 34 that at least partially surrounds various components of the combustor 16. The high pressure plenum 34 is in fluid communication with the compressor 14 (FIG. 1) to receive the compressed air 26 therefrom. An end cover 36 may be coupled to the outer casing 32. In particular embodiments, the outer casing 32 and the end cover 36 may at least partially define a head end volume or portion 38 of the combustor 16.

In particular embodiments, the head end portion 38 is in fluid communication with the high pressure plenum 34 and/or the compressor 14. One or more liners or ducts 40 may at least partially define a combustion chamber or zone 42 for combusting the fuel-air mixture and/or may at least partially define a hot gas path through the combustor (as indicated by an arrow) for directing the combustion gases 30 towards an inlet to the turbine 18.

In various embodiments, the combustor 16 includes a head end assembly 100. As shown in FIG. 2, the head end assembly 100 is disposed within the outer casing 32 and includes one or more bundled tube fuel nozzles 200 that extend axially from the end cover 36 with respect to axial centerline 46 of the combustor 16 and that are disposed upstream from the combustion chamber 42. In various embodiments, the head end assembly 100 may include a plurality of bundled tube fuel nozzles 200 (as shown in FIGS. 2 through 8). In particular embodiments, the bundled tube fuel nozzles 200 of the head end assembly 100 are in fluid communication with the fuel supply 48 via one or more fluid conduits 50. In many embodiments, the fluid conduit(s) 50 may be fluidly coupled and/or connected at one end to the end cover 36.

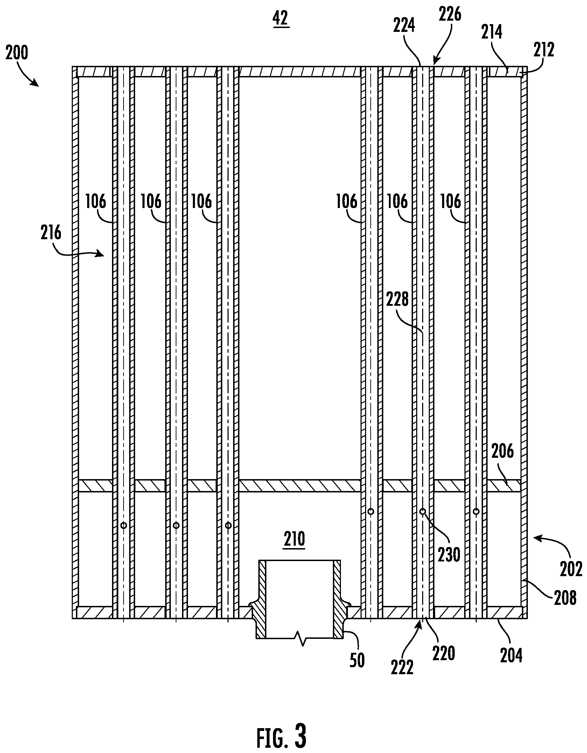

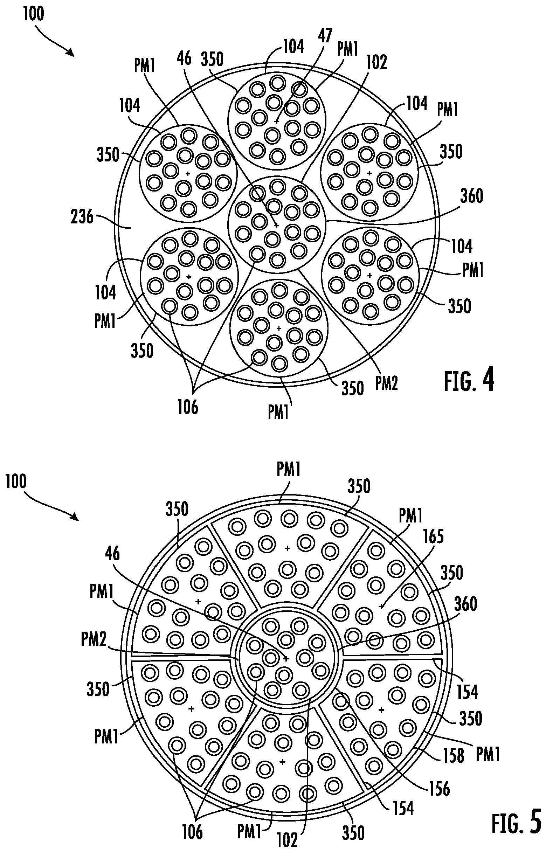

FIG. 3 provides a cross-sectional side view of a portion of a single bundled tube fuel nozzle 200 in an exemplary fuel nozzle assembly 100 as shown in FIG. 2, according to at least one embodiment of the present disclosure. In many embodiments, the bundled tube fuel nozzle 200 shown in FIG. 3 may be any one of the bundled tube fuel nozzles 102, 104, 150, 402 (as shown in FIGS. 4-8). Various embodiments of the combustor 16 may include different arrangements of the head end assembly 100 and is not limited to any particular arrangement, unless otherwise specified in the claims.

In at least one embodiment, as shown in FIG. 3, the fuel nozzle 200 includes a fuel plenum body 202 having a forward or upstream plate 204, an aft plate 206 axially spaced from the forward plate 204 and an outer band or shroud 208 that extends axially between the forward plate 204 and the aft plate 206. A fuel plenum 210 is defined within the fuel plenum body 202. In particular embodiments, the forward plate 204, the aft plate 206 and the outer band 208 may at least partially define the fuel plenum 210. In particular embodiments, a fluid conduit 50 may extend through the forward plate 204 to provide fuel 28 to the fuel plenum 210. In various embodiments, the fuel nozzle assembly 200 includes a nozzle cap plate 212 axially spaced from the aft plate 206. A hot side 214 of the nozzle cap plate 212 is generally disposed adjacent or proximate to the combustion chamber 42.

As shown in FIG. 3, the fuel nozzle assembly 200 may include a tube bundle 216 comprising a plurality of tubes 106. Each tube 106 may extend through the forward plate 204, the fuel plenum 210, the aft plate 206 and the nozzle cap plate 212. The tubes 106 are fixedly connected to and/or form a seal against the aft plate 206. For example, the tubes 218 may be welded, brazed or otherwise connected to the aft plate 206. Each tube 106 includes an inlet 220 defined at an upstream end 222 of each respective tube 106 and an outlet 224 defined at a downstream end 226 of each respective tube 106. Each tube 106 defines a respective premix flow passage 228 through the fuel nozzle 200. In particular embodiments, one or more tubes 106 of the plurality of tubes 106 is in fluid communication with the fuel plenum 210 via one or more fuel ports 230 defined within the respective tube(s) 106.

FIGS. 4-8 are plan views of embodiments of the head end assembly 100, as viewed from an aft end of the combustor 16 looking in an upstream direction.

As shown in FIGS. 4 and 5, a center fuel nozzle 102 may be disposed about a centerline 46 of the combustor 16 and may be secured within a respective opening (not separately labeled) in a head end cap plate. A plurality of outer fuel nozzles 104 are disposed about the center fuel nozzle 102 and likewise are secured within respective openings in the head end cap plate 236. Each outer fuel nozzle 104 has a centerline 47 radially outward from the centerline 46 of combustor 16. Each centerline 47 of each outer fuel nozzle 104 may be substantially parallel to the centerline 46 of combustor 16. Each fuel nozzle 102, 104 may be a bundled tube fuel nozzle having a plurality of tubes 106, as shown in FIG. 3. The plurality of tubes 106 may be parallel, non-concentric mixing tubes that extend through a respective fuel plenum 202 towards the combustion zone 42. Each of the plurality of tubes 106 may be substantially parallel to the axial centerlines 47 and 46. The head end cap plate 236 may include a plurality of cooling holes to facilitate cooling of the head end cap plate 236.

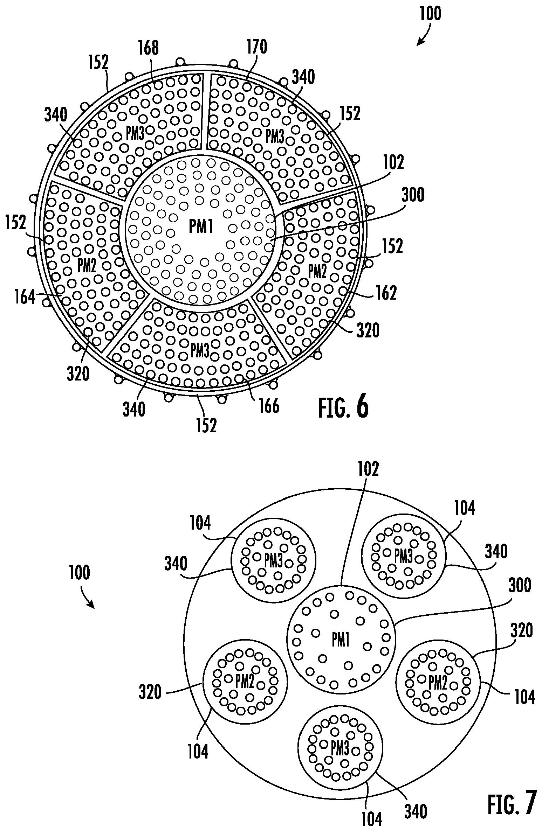

As shown in FIGS. 5 and 6, a center fuel nozzle 102 may be surrounded by a plurality of outer fuel nozzles 150. Each outer fuel nozzle 150 has a truncated wedge shape, such that the outer fuel nozzles 150 may be positioned in close proximity to the center fuel nozzle 102 and cover a majority of the area of the head end cap plate 236. The truncated wedge shape may be defined as having a pair of radial sides 154 that extend in opposite directions and that are joined by a first (radially inner) arcuate side 156 and a second (radially outer) arcuate side 158. The radially outer sides 158 define a radially outer perimeter of the outer fuel nozzles 150 and, collectively, of the head end cap plate 236. Each outer fuel nozzle 150 has a respective centerline 165 radially outward of the centerline 46 of the center fuel nozzle 102 and the combustor 16.

It should be noted that the specific size, spacing, and number of tubes 106 in the plurality of tubes 106 shown in the Figures is intended to be representative of the present bundled tube fuel nozzles 102, 104, 150 and should not be construed as limiting the present bundled tube fuel nozzles as having tubes of any particular size, spacing, or number. Moreover, it should be not construed as limiting the present bundled tube fuel nozzles as having tubes with a single tube diameter.

Utilizing any one of the bundled tube fuel nozzle assemblies 100 shown in FIGS. 4-8 may advantageously allow for segmentation and/or partitioning between each of the outer fuel nozzles 104, 150 and the center fuel nozzle 102. Because each tube 106 in each bundled tube fuel nozzle 200 may be substantially parallel to one another and axially aligned with the centerline of combustor 16, the bundled tube fuel nozzle assembly 100 may not impart any swirl on the fuel/air mixture entering the combustion zone 42. Specifically, the fuel/air mixture exiting the respective outlet 224 of each tube 106 in the plurality of tubes 106 may travel generally axially with respect to an axial centerline of combustor 16. Therefore, one or more fuel nozzle groups 300, 320, 340 (as shown in FIG. 6) may be operated together or in isolation, i.e. leaving one or more nozzle groups turned off, and the generally axial path of the fuel/air exiting the nozzle groups in operation prevents interactions with the unfueled nozzle groups.

For example, the first nozzle group 300, which may include a center nozzle 102, may be operated in isolation at low gas turbine load requirements without the fuel/air exiting the center nozzle 102 being negatively impacted by air flowing through the adjacent/neighboring outer fuel nozzles 104, 152. Likewise, any nozzle group 300, 320, 340 may be operated in isolation or in any combination with another nozzle group 300, 320, 340 to meet a given gas turbine load requirement and corresponding emissions output requirement.

FIGS. 6 and 7 illustrate two embodiments of the bundled tube fuel nozzle assembly 100. As shown, the bundled tube fuel nozzle assembly 100 may include one or more fuel nozzle groups, e.g. a first nozzle group 300, a second nozzle group 320, and a third nozzle group 340. Each fuel nozzle group 300, 320, 340 may include one or more center fuel nozzles 102 and a various number of outer fuel nozzles 104, 152. For example, in some embodiments, the first nozzle group 300 may include a center fuel nozzle 102, the second nozzle group 320 may include two outer fuel nozzles 162, 164, and the third nozzle group may include three outer fuel nozzles 166, 168, 170.

Each nozzle group 300, 320, 340 may be capable of firing entirely separately, all together, or in any combination within the combustor 16. For example, each fuel nozzle group 300, 320, 340 is fluidly coupled to one or more of the premix fuel manifolds or fuel circuits PM1, PM2, and PM3. In some embodiments, the first nozzle group 300 may fluidly coupled to the first premix manifold ("PM1"), the second nozzle group 320 may fluidly coupled to the second premix manifold ("PM2"), and the third nozzle group 340 may be fluidly coupled to the third premix manifold ("PM3"). As discussed above, the portion of fuel 28 flowing through the various fuel circuits (PM1, PM2, and PM3) and nozzle groups 300, 320, 340 is determined by the fuel controller 29 (FIG. 1). Therefore, the nozzle groups 300, 320, and 340 may be operated together or separately depending on the portion of fuel 28 flowing through the corresponding fuel circuits PM1, PM2, and PM3. For example, at a peak load time, all the nozzle groups 300, 320, 340 may be required to fire at the same time in order to meet the load requirement. In which case, fuel 28 may flow through all the fuel circuits PM1, PM2, and PM3 and the corresponding nozzle groups 300, 320, and 340. Additionally, at lower loads, one or more fuel nozzle groups 300, 320, or 340 may be shut off without impacting NOx or CO emissions.

In order to maintain emission compliance at lower loads when operating the fuel nozzle groups 300, 320, and 340 separately, the amount of air and fuel supplied to the nozzles may be regulated. The air supplied to the fuel nozzle groups 300, 320 and 340 may be adjusted via the inlet guide vanes 21 at the inlet of the compressor 14 (as shown in FIG. 1). More specifically, the controller 19 may change the angle of the inlet guide vanes 21 by adjusting the actuators 23. Adjusting the inlet guide vanes 21 alters the amount of ambient air entering the compressor 14, thereby adjusting the portion of air that is supplied to the head end assembly 100 for each fuel nozzle group 300, 320, and 340.

As discussed above, the portion of fuel 28 supplied to each nozzle group 300, 320, 340 is determined by the fuel controller 29 coupled to the various fuel circuits PM1, PM2, and PM3. The controller 19 and/or fuel controller 29 may maintain the proper fuel/air ratio exiting the nozzle groups 300, 320, 340 at any required load to advantageously allow for flexible operation of the gas turbine 10 while maintaining emissions requirements.

The fuel circuits PM1, PM2, PM3 and the inlet guide vanes 21 may together regulate the fuel/air ratio exiting the bundled tube fuel nozzle assembly 100 into the combustion zone 42 to maintain emissions compliance. Additionally, the fuel circuits PM1, PM2, PM3 and the inlet guide vanes 21 may be capable of regulating the fuel/air ratio exiting each of the fuel nozzle groups 300, 320, 340 to allow for segmented operation while maintaining emissions compliance. For example, fuel nozzle groups 300, 320, 340 may be operated in isolation, all together, or in any combination while maintaining emissions compliance.

In a ramp-up scenario, the first nozzle group 300 may be solely fired at the lower end of a load spectrum. As the gas turbine 10 load requirement increases, in many cases, the fuel and air supplied to the first nozzle group 300 may increase, and/or the second nozzle group 320 may begin to fire along with the first nozzle group 300 to meet the increased load. As the load requirement continues to increase up to full gas turbine load conditions, the fuel and air supplied to the first nozzle group 300 and second nozzle group 320 will continue to increase, and the third nozzle group 340 may begin to fire within the combustor 16 to meet the full load requirement.

Each nozzle group 300, 320, 340 may be selectively fired based on the required gas turbine required load, and, in some scenarios, different combinations of nozzle groups 300, 320, 340 may be utilized to meet the same load. For example, at a given gas turbine load requirement, the first nozzle group 300 may be fired along with the second nozzle group 320 to meet the gas turbine load while maintaining emissions requirements. Alternatively, at the same gas turbine load requirement, the third nozzle group 340 may be solely operated to meet the same gas turbine load while maintaining emissions requirements. In the embodiment shown in FIG. 6, for both the scenarios discussed above, firing both the first nozzle group 300 and the second nozzle group 320 or solely firing the third nozzle group 340 results in three bundled tube fuel nozzles 100 being fired simultaneously.

In some embodiments, such as those shown in FIG. 6, the center fuel nozzle 102 may be circumferentially surrounded by five outer fuel nozzles 152. In such embodiments, the second nozzle group 320, corresponding to the PM2 fuel circuit, may include two circumferentially spaced apart outer fuel nozzles 162 and 164. Additionally, the third nozzle group 340, corresponding to the PM3 fuel circuit, may include two circumferentially adjacent/neighboring outer fuel nozzles 168 and 170 and a third outer fuel nozzle 166 circumferentially spaced apart from the others in the third nozzle group 340. The third outer fuel nozzle 166 of the PM3 fuel circuit may be positioned circumferentially between the outer fuel nozzles 162, 164 of the PM2 fuel circuit. A similar arrangement of the outer fuel nozzles 104 associated with the PM2 and PM3 fuel circuits is shown in FIG. 7.

Various embodiments of the head end assembly 100 may include any number of fuel nozzle groups/partitions and are not limited to any particular number of groups, unless otherwise specified in the claims. Similarly, each nozzle group may include any number of bundled tube fuel nozzles and is not limited to any particular number of bundled tube fuel nozzles, unless otherwise specified in the claims.

For example, in the embodiment shown in FIGS. 4 and 5, the head end assembly 100 may include six outer fuel nozzles 104, 150 annularly arranged around a center fuel nozzle 102. Each center fuel nozzle 102 and outer fuel nozzles 104, 150 are fluidly coupled to the end cover 36. As shown, the six outer fuel nozzles 104, 150 may be round (FIG. 5) or wedge shaped (FIG. 6).

The seven bundled tube fuel nozzles 102, 104, 150 may be partitioned into two fuel nozzle groups, e.g., a first nozzle group 350 and a second nozzle group 360. As shown, the first nozzle group 350 may include all of the outer fuel nozzles 104, 150, and the second nozzle group 360 may include only the center nozzle 102. Each of the fuel nozzle groups 350, 360 may be capable of isolated operation from the other nozzle group 350, 360. Each fuel nozzle group 350, 360 may be fluidly coupled to one or more premix manifolds or fuel circuits, e.g., the first nozzle group 350 may be fluidly coupled to a first fuel circuit PM1, and the second nozzle group 360 may be fluidly coupled to a second fuel circuit PM2.

Each fuel circuit PM1 and PM2 may be capable of regulating the fuel flow through the corresponding fuel nozzle groups 350, 360. Likewise, the air flow through each of the fuel nozzle groups 350, 360 may be regulated by the inlet guide vanes or IGVs 21 of the compressor 14. The fuel circuits PM1, PM2 and the inlet guide vanes 21 may together regulate the fuel/air ratio exiting the head end assembly 100 into the combustion zone 42 to maintain emissions compliance over various operating loads of the gas turbine 10. Additionally, the fuel circuits PM1, PM2 and the inlet guide vanes 21 may be capable of regulating the fuel/air ratio exiting each of the fuel nozzle groups 350, 360 to allow for segmented operation while maintaining emissions compliance.

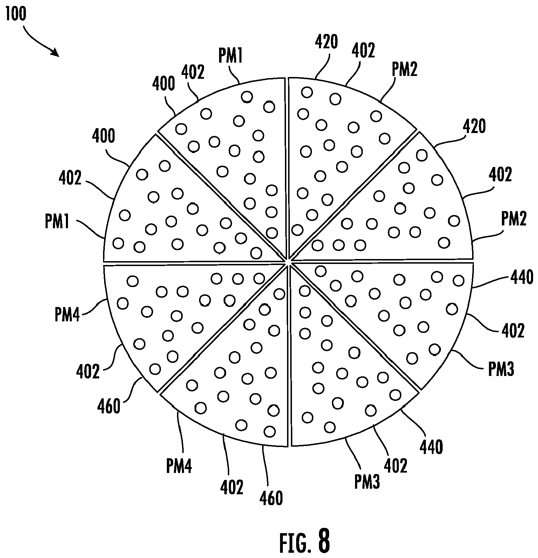

In the embodiment shown in FIG. 8, the head end assembly 100 may include eight bundled tube fuel nozzles 402extending from, and fluidly coupled to, the end cover 36. As shown, the eight bundled tube fuel nozzles 402 may be wedge shaped or substantially pie shaped. The eight bundled tube fuel nozzles 402 may be partitioned into four fuel nozzle groups, e.g., a first nozzle group 400, a second nozzle group 420, a third nozzle group 440, and a fourth nozzle group 460.

Each of the fuel nozzle groups 400, 420, 440, 460 may be capable of isolated operation from the other nozzle groups 400, 420, 440, 460. Additionally, each fuel nozzle group 400, 420, 440, 460 may be operated in combination with another one or more nozzle groups 400, 420, 440, 460. Each fuel nozzle group 400, 420, 440, 460 may be fluidly coupled to one or more premix manifolds or fuel circuits, e.g., the first nozzle group 400 may be fluidly coupled to a first fuel circuit PM1, the second nozzle group 420 may be fluidly coupled to a second fuel circuit PM2, the third nozzle group 440 may be fluidly coupled to a third fuel circuit PM3, and the fourth nozzle group 460 may be fluidly coupled to a fourth fuel circuit PM4. Each fuel circuit PM1, PM2, PM3, PM4 may be capable of regulating the fuel flow through the corresponding fuel nozzle groups 400, 420, 440, 460.

Likewise, the air flow through each of the fuel nozzle groups 400, 420, 440, 460 may be regulated by the inlet guide vanes or IGVs 21 of the compressor 14. The fuel circuits PM1, PM2, PM3, PM4 and the inlet guide vanes 21 may together regulate the fuel/air ratio exiting the head end assembly 100 into the combustion zone 42 to maintain emissions compliance. Additionally, the fuel circuits PM1, PM2, PM3, PM4 and the inlet guide vanes 21 may be capable of regulating the fuel/air ratio exiting each of the fuel nozzle groups 400, 420, 440, 460 to allow for segmented operation while maintaining emissions compliance. For example, fuel nozzle groups 400, 420, 440, 460 may be operated in isolation, all together, or in any combination while maintaining emissions compliance.

In some embodiments, such as the ones shown in FIGS. 4-8, each of the bundled tube fuel nozzles 102, 104, 150, 402 may be fluidly coupled to a corresponding premix fuel manifold. In such embodiments, each of the bundled tube fuel nozzles 102, 104, 150, 402 may be capable of operating entirely isolated from the rest. Additionally, each of the bundled tube fuel nozzles may operate together or in any combination.

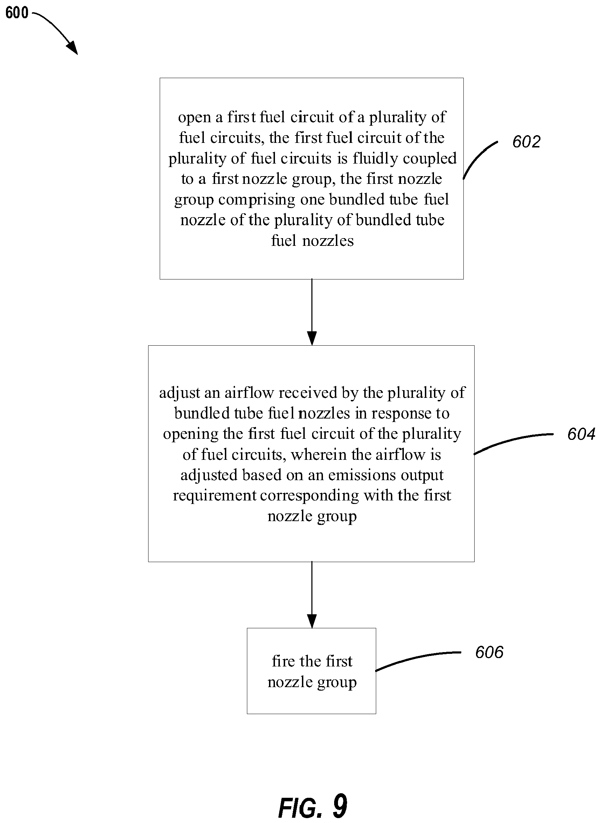

FIG. 9 provides a flow chart which graphically illustrates an example method 600 of selectively operating a head end assembly, such as the head end assembly 100 described herein, in accordance with one or more example embodiments of the present disclosure. As illustrated in FIG. 9, the method 600 may include a step 602 of opening a first fuel circuit of a plurality of fuel circuits, e.g., PM1, PM2, or PM3. The first fuel circuit PM1, PM2, PM3 may be fluidly coupled to a first nozzle group 300, 320, 340. The first nozzle group 300, 320, 340 may include one bundled tube fuel nozzle 200. The method 600 may further include a step 604 of adjusting an airflow 26 received by the plurality of bundled tube fuel nozzles 200 in response to opening the first fuel circuit PM1, PM2, PM3. The airflow 26 may be adjusted based on an emissions output requirement corresponding with the first nozzle group 300, 320, 340. The emissions output requirements may be stored in or calculated by the fuel controller 29 or the gas turbine controller 19. The method 600 may also include a step 606 of firing the first nozzle group 300, 320, 340.

In some embodiments (not shown), the method may further include opening a second fuel circuit PM1, PM2, PM3. The second fuel circuit may be fluidly coupled to a second group of fuel nozzles 300, 320, 340. The second group of fuel nozzles 300, 320, 340 may include one or more bundled tube fuel nozzles 200 that is not the same as the one bundled tube fuel nozzle 200 of the first nozzle group 300, 320, 340.

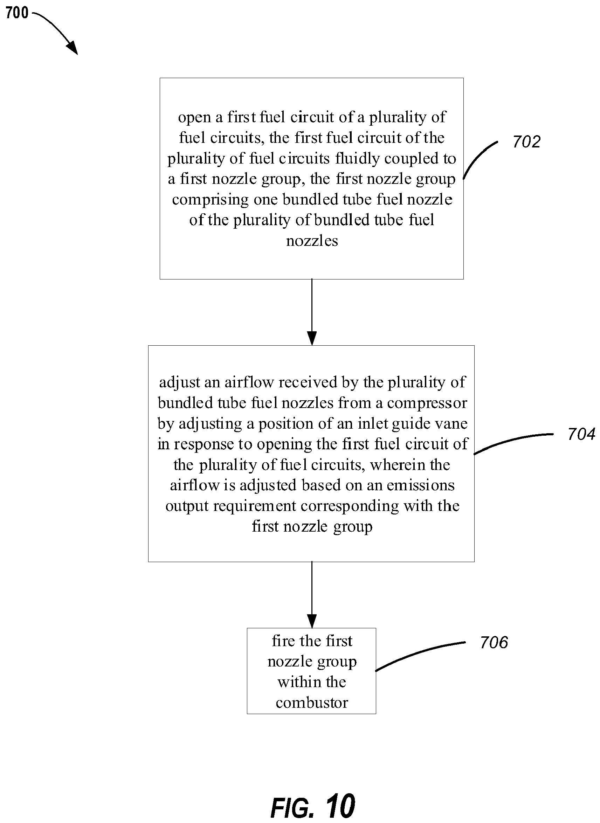

FIG. 10 provides a flow chart which graphically illustrates a method 700 of selectively operating a head end assembly in a combustor of a turbomachine, such as the gas turbine 10 described herein, in accordance with one or more additional exemplary embodiments of the present disclosure. As illustrated in FIG. 10, the method 700 may include a step 702 of opening a first fuel circuit of a plurality of fuel circuits, e.g. PM1, PM2, or PM3. The first fuel circuit PM1, PM2, PM3 may be fluidly coupled to a first nozzle group, e.g., 300, 320, 340. The first nozzle group 320, 340, 360 may include one bundled tube fuel nozzle 200. The method 700 may further include a step 704 of adjusting an airflow 26 received by the plurality of bundled tube fuel nozzles 200 from a compressor 14 by adjusting a position of inlet guide vanes 21 in response to opening the first fuel circuit PM1, PM2, PM3. The airflow 26 is adjusted based on an emissions output requirement corresponding with the first nozzle group 300, 320, 340. The emissions output requirements may be stored in or calculated by the fuel controller 29 or the gas turbine controller 19. The method 700 may also include a step 706 of firing the first nozzle group 300, 320, 340 within the combustor 16.

This written description uses examples to disclose the invention, including the best mode, and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims, if they include structural elements that do not differ from the literal language of the claims, or if they include equivalent structural elements with insubstantial differences from the literal language of the claims.

## Claims

1. A method of selectively operating a head end assembly (100) of a gas turbine combustor (16), the head end assembly (100) comprising a plurality of bundled tube fuel nozzle (200)s (200), the method comprising:
opening a first fuel circuit (PM1) of a plurality of fuel circuits (PM1), (PM2), (PM3), the first fuel circuit (PM1) of the plurality of fuel circuits (PM1), (PM2), (PM3) being fluidly coupled to a first nozzle group (300) of a plurality of nozzle groups (300), (320), (340), the first nozzle group (300) comprising one bundled tube fuel nozzle (200) of the plurality of bundled tube fuel nozzle (200)s (200);
adjusting an airflow (26) received by the plurality of bundled tube fuel nozzle (200)s (200) in response to opening the first fuel circuit (PM1) of the plurality of fuel circuits (PM1), (PM2), (PM3), wherein the airflow (26) is adjusted based on an emissions output requirement corresponding with the first nozzle group (300); and
firing the first nozzle group (300).

2. The method as in claim 1, further comprising opening a second fuel circuit (PM2) of the plurality of fuel circuits (PM1), (PM2), (PM3), the second fuel circuit (PM2) fluidly coupled to a second nozzle group (320) of the plurality of nozzle groups (300), (320), (340), the second nozzle group (320) comprising at least one bundled tube fuel nozzle (200) of the plurality of bundled tube fuel nozzle (200)s (200) that is not the same as the one bundled tube fuel nozzle (200) of the first nozzle group (300).

3. The method as in claim 2, further comprising adjusting an airflow (26) received by the plurality of bundled tube fuel nozzle (200)s (200) in response to opening the second fuel circuit (PM2), wherein the airflow (26) is adjusted based on the emissions output requirement corresponding with the first nozzle group (300) and the second nozzle group (320) .

4. The method as in claim 3, further comprising firing the second nozzle group (320).

5. The method as in any of claims 1-4, wherein the plurality of bundled tube fuel nozzle (200)s (200) comprises a plurality of outer fuel nozzles (104), (152) annularly arranged about a center fuel nozzle (102).

6. The method as in claim 5, wherein each fuel circuit of the plurality of fuel circuits (PM1), (PM2), (PM3) is fluidly coupled to a respective nozzle group of a plurality of nozzle groups (300), (320), (340), the plurality of nozzle groups (300), (320), (340) comprising the first nozzle group (300), a second nozzle group (320), and a third nozzle group (340); and wherein the one bundled tube fuel nozzle (200) of the first nozzle group (300) is the center fuel nozzle (102), the second nozzle group (320) includes at least one outer fuel nozzle of the plurality of outer fuel nozzles (104), (152), and the third nozzle group (340) includes at least one outer fuel nozzle of the plurality of outer fuel nozzles (104), (152) other than the at least one outer fuel nozzle of the plurality of outer fuel nozzles (104), (152) in the second nozzle group (320).

7. The method as in any of claims 5-6, wherein the first nozzle group (300) is selected from the group consisting of the center fuel nozzle (102), two outer fuel nozzles (104), (152) of the plurality of outer fuel nozzles (104), (152), or three outer fuel nozzles (104), (152) of the plurality of outer fuel nozzles (104), (152).

8. The method as in any of claims 1-7, wherein opening the first fuel circuit (PM1) (PM1) further comprises conveying a fuel flow through the first fuel circuit (PM1) (PM1) and the first nozzle group (300).

9. The method as in claim 8, further comprising controlling a portion of the fuel flow received by the first nozzle group (300) by a valve fluidly connected to the first fuel circuit (PM1) (PM1), wherein the portion of fuel flow received by the first nozzle group (300) is based on the emissions output requirement.

10. The method as in any of claims 1-9, wherein each bundled tube fuel nozzle (200) of the plurality of bundled tube fuel nozzles (200) comprises a fuel plenum (210) and a plurality of premix tubes (106) which extend axially through the fuel plenum (210) with respect to a common axial centerline of the plurality of bundled tube fuel nozzles (200).

11. A method of selectively operating a head end assembly (100) in a combustor (16) of a gas turbine, the head end assembly (100) comprising a plurality of bundled tube fuel nozzles (200), the method comprising:
opening a first fuel circuit (PM1) of a plurality of fuel circuits (PM1), (PM2), (PM3), the first fuel circuit (PM1) (PM1) of the plurality of fuel circuits (PM1), (PM2), (PM3) fluidly coupled to a first nozzle group (300) of a plurality of nozzle groups (300), (320), (340), the first nozzle group (300) comprising one bundled tube fuel nozzle (200) of the plurality of bundled tube fuel nozzles (200);
adjusting an airflow (26) received by the plurality of bundled tube fuel nozzles (200) from a compressor by adjusting a position of inlet guide vanes in response to opening the first fuel circuit (PM1) of the plurality of fuel circuits (PM1), (PM2), (PM3), wherein the airflow (26) is adjusted based on an emissions output requirement corresponding with the first nozzle group (300); and
firing the first nozzle group (300) within the combustor (16).

12. The method as in claim 11, further comprising opening a second fuel circuit (PM2) of the plurality of fuel circuits (PM1), (PM2), (PM3), the second fuel circuit (PM2) fluidly coupled to a second nozzle group (320) of the plurality of nozzle groups (300), (320), (340), the second nozzle group (320) comprising at least one bundled tube fuel nozzle (200) of the plurality of bundled tube fuel nozzles (200) that is not included in the first nozzle group (300).

13. The method as in claim 12, further comprising adjusting, via the inlet guide vanes, the airflow (26) received by the plurality of bundled tube fuel nozzles (200) in response to opening the second fuel circuit (PM2), wherein the airflow (26) is adjusted based on an emissions output requirement corresponding with the first nozzle group (300) and the second nozzle group (320).

14. The method as in claim 13, further comprising firing the second nozzle group (320) within the combustor (16).

15. The method as in any of claims 11-14, wherein the plurality of bundled tube fuel nozzles (200) comprises a plurality of outer fuel nozzles (104), (152) annularly arranged about a center fuel nozzle (102).
